# EUROPÄISCHE PATENTSCHRIFT

(11) **EP 1 264 719 B1**
(45) Veröffentlichungstag und Bekanntmachung des Hinweises auf die Patenterteilung: **22.08.2007**
(21) Anmeldenummer: 02012013.5
(22) Anmeldetag: 31.05.2002
(51) Int. Cl.: B60J 7/00, H05B 3/86

(54) **Transparente Scheibe für ein Fahrzeugdach oder für ein Fahrzeugdachmodul**
Transparent panel for vehicle roof or for vehicle roof module
Panneau transparent pour un toit de véhicule ou pour un module de toit de véhicule

(30) Priorität: 08.06.2001 DE 10127847
(43) Veröffentlichungstag der Anmeldung: 11.12.2002
(73) Patentinhaber: Webasto AG, 82131 Stockdorf (DE)
(72) Erfinder: Teschner, Helmut, 86923 Finning (DE)
(74) Vertreter: Konnerth, Dieter Hans

(56) Entgegenhaltungen:
- DE-A- 3 500 436
- DE-A- 4 440 634
- DE-A- 19 810 848
- DE-A- 19 962 115
- DE-C- 19 849 840
- PATENT ABSTRACTS OF JAPAN vol. 2000, no. 08, 6. Oktober 2000 (2000-10-06) & JP 2000 128588 A (CENTRAL GLASS CO LTD), 9. Mai 2000 (2000-05-09)

## Beschreibung

Die Erfindung bezieht sich auf eine transparente Scheibe für ein Fahrzeugdach mit wenigstens einem Dachelement oder für ein Dachmodul für ein Fahrzeugdach, wobei die Scheibe zur Durchsicht vom Fahrzeuginneren nach außen nutzbar ist und eine Schicht in Form einer Beschichtung und/oder Folie aufweist, welche die Transmission durch die Scheibe im infraroten und/oder im sichtbaren Spektralbereich verringert. Ferner betrifft die Erfindung ein Fahrzeugdach mit wenigstens einem Dachelement sowie ein Dachmodul für ein Fahrzeugdach.

Aus der DE 198 49 840 C1 ist ein Fahrzeugdach mit wenigstens einem durchsichtigen Dachelement bekannt, welches eine Durchsicht vom Fahrzeuginneren nach außen erlaubt, wobei das Dachelement zur Verminderung der Transmission im Infrarot-Bereich oder im sichtbaren Spektralbereich mit einer Schicht, und zwar insbesondere mit einer metallischen Schicht versehen ist. Aus der DE 198 49 838 C1 ist ferner ein transparentes Dachmodul für ein Fahrzeugdach mit einer transparenten Scheibe bekannt, welche ebenfalls eine Durchsicht nach außen ermöglicht und mit einer Schicht in Form einer Beschichtung und/oder Folie versehen ist, welche die Transmission durch die Scheibe im infraroten und im sichtbaren Spektralbereich verhindert.

Bei den angegebenen bekannten Vorrichtungen können bei kühler oder kalter Witterung und geöffnetem Schiebehimmel im Fahrzeug aufgrund der verwendeten metallischen Schichten unerwünschte Reflektionen auftreten, welche von Fahrzeuginsassen oftmals als unangenehm und unbehaglich empfunden werden. Ferner kann bei kalter und kühler Witterung die transparente Scheibe der angegebenen Vorrichtungen beschlagen oder es kann sich Kondenswasser auf der Scheibe niederschlagen.

Der Erfindung liegt die Aufgabe zugrunde, eine transparente Scheibe für ein Fahrzeugdach oder für ein Dachmodul zu schaffen, welche auch bei kühler oder kalter Witterung ein angenehmes Klima im Fahrzeuginneren ermöglicht. Ferner sollen ein Fahrzeugdach und ein Dachmodul jeweils mit einer transparenten Scheibe angeboten werden, welche ebenfalls ein angenehmes Innenraumklima im Fahrzeug auch bei kühler oder kalter Witterung ermöglichen.

Die Aufgabe wird für die transparente Scheibe erfindungsgemäß dadurch gelöst, daß die bereits vorhandene vorzugsweise metallische Schicht zur Verminderung der Transmission im infraroten- und/oder im sichtbaren Spektralbereich zusätzliche elektrische Anschlüsse zur Beheizung aufweist. Damit besitzt die Schicht neben den geschilderten Wirkungen der Transmissionsminderung auch in einer Doppelfunktion die Funktion eines Heizelements. Vorteilhafte Ausführungsformen der transparenten Scheibe werden in den Unteransprüchen 2 - 12 beschrieben. Für das Fahrzeugdach wird die Aufgabe durch die Merkmale des Patentanspruchs 14 gelöst. Eine Lösung der Aufgabe für das Dachmodul wird durch die Merkmale des Patentanspruchs 15 erreicht.

Bei der erfindungsgemäßen transparenten Scheibe wird durch Beheizung der Schicht der Niederschlag von Kondenswasser verhindert und auch bei kalter oder kühler Witterung ein angenehmes Innenraumklima im Fahrzeug erzeugt.

Gemäß einer vorteilhaften Ausführungsform der transparenten Scheibe sind die Anschlüsse der metallischen Schicht als an sich bekannte Kontaktfahnen ausgebildet, die z.B. auch für Heizleiter von Heckscheiben von Fahrzeugen verwendet werden. Die Stromversorgung der metallischen Schicht erfolgt vorteilhafterweise durch eine Solarzelle im Fahrzeugdach oder im Dachmodul, wobei die Solarzelle idealerweise benachbart zur metallischen Schicht angebracht ist, so daß nur kurze Verdrahtungswege zwischen Solarzelle (Stromversorgung) und metallischer Schicht bestehen. In einer alternativen oder ergänzenden Ausführungsform kann auch eine Batterie, z.B. die Fahrzeugbatterie, zur Stromversorgung der metallischen Schicht verwendet werden. Hierbei wird eine besonders zuverlässige Stromversorgung auch bei geringer Sonneneinstrahlung ermöglicht.

Zur Aktivierung der Heizfunktion der metallischen Schicht kann ein Temperatursensor mit einer einstellbaren Grenztemperatur vorgesehen sein. Bei Unterschreitung dieser Grenztemperatur wird dann die Heizfunktion der metallischen Schicht automatisch gestartet. Alternativ oder ergänzend kann auch eine Feuchtesensor zur Aktivierung der Heizfunktion der metallischen Schicht vorgesehen sein, wobei ein festgestellter Niederschlag von Kondenswasser und/oder eine erhöhte Luftfeuchtigkeit im Innenraum des Fahrzeugs zur automatischen Aktivierung der Heizfunktion führen können. Der Temperatursensor und der Feuchtesensor können dabei durch eine logische Schaltung gekoppelt werden, so daß bei Unterschreitung einer bestimmten Grenztemperatur oder bei Überschreitung einer Schwelle für die Raumfeuchtigkeit jeweils eine Aktivierung der Heizfunktion erfolgt.

In einer weiteren vorteilhaften Ausführungsform kann die beheizbare Schicht mit mindestens einem Heizleiter des Fahrzeugs, insbesondere mit einer beheizbaren Rückscheibe des Fahrzeugs, zur gemeinsamen Aktivierung gekoppelt werden. Wenn der Fahrer die Heckscheibenheizung aktiviert, wird dabei auch die Beheizung der transparenten Scheibe im Dachbereich gleichzeitig eingeschaltet werden.

Über ein Zeitschaltgerät kann die eingeschaltete Heizfunktion nach einer bestimmten Zeitdauer sich automatisch wieder deaktivieren, so daß der Stromverbrauch der beheizbaren Schicht begrenzt wird. Eine Deaktivierung der Heizfunktion kann desweiteren auch bei einer festgestellten Überschreitung der eingestellten Grenztemperatur durch den Temperatursensor und/oder bei Absinken des Raumfeuchtigkeitsgehalts unter den einstellbaren Feuchtegehalt erfolgen. Insgesamt können mehrere Auslösekriterien (z.B. Temperatur, Raumfeuchtigkeit) für die Aktivierung und auch für die Deaktivierung der Heizfunktion der beheizbaren Schicht einzeln oder in Verknüpfung berücksichtigt werden.

Wenn die beheizbare Schicht ganzflächig beheizt wird, stellt die gesamte beheizbare Schicht einen zwischen den Anschlüssen befindlichen elektrischen Flächenwiderstand dar. Zur Dimensionierung des ohmschen Widerstands dieses Flächenwiderstands sind vorteilhafterweise erste leitfähige Bereiche und weitere nicht-leitfähige (isolierende) Bereiche in der beheizbaren Schicht vorgesehen. Hierdurch kann der ohmsche Widerstand zwischen den elektrischen Anschlüssen der beheizbaren Schicht bestimmt und an die Stromversorgung angepaßt werden. In diesem Zusammenhang können die leitfähigen Bereiche einen aus der Heckscheibenbeheizung von Fahrzeugen bekannten rechteckförmigen Verlauf aufweisen. Damit würde die transparente Scheibe optisch einer Heckscheibe eines Fahrzeugs mit angebrachtem Heizleiter entsprechen.

Vorteilhafterweise ist die beheizbare Schicht transparent und besitzt keine abgedunkelte Tönung. Derartige transparente Schichten, die dennoch die beabsichtigte Transmissionsminderung im infraroten und/oder im sichtbaren Spektralbereich aufweisen, können z.B. durch eine Beschichtung mit Indium-Zinn-Oxid oder durch Fluor-Zinn-Oxid erzielt werden. Generell kann die beheizbare Schicht die in der DE 198 49 840 C1 und der DE 198 49 838 C1 beschriebenen Materialien aufweisen bzw. wie dort beschrieben ausgeführt sein, insbesondere als metallische Schicht, Metalloxid- oder Metallnitrid-Schicht ausgebildet sein.

Das erfindungsgemäße Fahrzeugdach mit wenigstens einem bewegbaren oder festen Dachelement dient zum Einbau einer transparenten Scheibe mit den Merkmalen der Patentansprüche 1 - 12. Beim erfindungsgemäßen Dachmodul für ein Fahrzeugdach kann ebenfalls eine transparente Scheibe mit den Merkmalen der Patentansprüche 1 - 12 vorgesehen sein. Insgesamt werden damit sowohl für das erfindungsgemäße Fahrzeugdach als auch für das erfindungsgemäße Dachmodul die angestrebte Verbesserung des Innenraumklimas im Fahrzeug erreicht.

Die Erfindung ist anhand von Ausführungsbeispielen in den Zeichnungsfiguren näher erläutert. Es zeigen:
- Fig. 1: eine Aufsicht auf ein erfindungsgemäß ausgebildetes Fahrzeugdach,
- Fig. 2: einen Längsschnitt durch das Fahrzeugdach nach Fig. 1,
- Fig. 3: eine perspektivische Ansicht eines erfindungsgemäß ausgebildeten Dachmoduls sowie
- Fig. 4: einen Längsschnitt eines Dachmoduls gemäß Fig. 3.

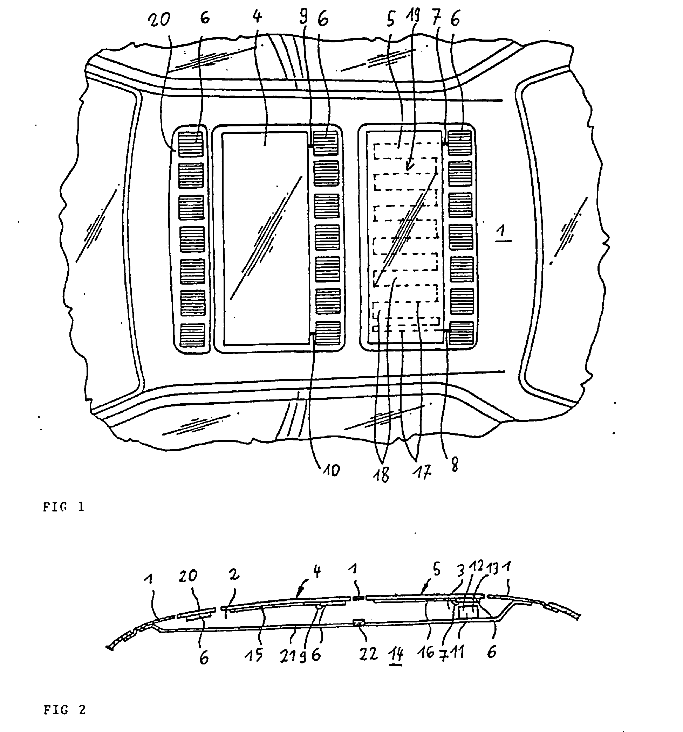

Aus den Fig. 1 und Fig. 2 geht ein Fahrzeugdach mit einer festen Dachhaut 1 hervor, in welcher zwei Dachöffnungen 2, 3 zur Aufnahme erfindungsgemäßer transparenter Scheiben 4 und 5 mit benachbart angebrachten Solarzellen 6 vorgesehen sind. Ferner sind eine aufklappbare Windabweislamelle 20 und ein Rahmen 21 mit einer verstärkenden Querstrebe 22 abgebildet. Die metallischen Schichten 15, 16 der Scheiben 4, 5 besitzen elektrische schematisch dargestellte Anschlüsse 7, 8 und 9, 10, die z.B. als an sich bekannte Kontaktfahnen ausgebildet und zur Stromversorgung mit den Solarzellen 6 verbunden sind.

Die Anschlüsse 7 und 9 gehen auch aus Fig. 2 hervor. Bei Stromversorgung der Scheiben 4, 5 alternativ oder ergänzend über eine (Fahrzeug-)batterie sind die Anschlüsse 7, 8 und 9, 10 mit dieser verbunden (nicht abgebildet). In einem schematisch dargestellten Bereich 11 befinden sich nicht näher abgebildete Befestigungs- und/oder Antriebselemente. Im Bereich 11 kann auch ein Temperatursensor 12 und/oder Feuchtesensor 13 vorgesehen sein. Zur Ansteuerung der beheizbaren Scheiben 4 und 5 über den Temperatursensor 12 und/oder den Feuchtesensor 13 kann im Bereich 11 oder im Fahrzeuginnenraum 14 eine an sich bekannte elektronische Schaltung vorgesehen sein.

Bei Aktivierung der Heizfunktion der Scheibe 4 wird deren gesamte beschichtete Fläche beheizt, wodurch ein angenehmes Innenraumklima mit vermindertem Feuchtigkeitsgehalt und erhöhter Temperatur erreicht wird.

Zur Dimensionierung des ohmschen Widerstands der auf den Scheiben 4 und 5 angebrachten beheizbaren Schichten 15 und 16 können - dargestellt am Beispiel der Scheibe 5 - erste elektrisch leitfähige Bereiche 17 und zweite elektrische nicht-leitfähige Bereiche 18 vorgesehen sein. Hierbei kann durch entsprechende Anordnung der leitfähigen Bereiche 17 in der beheizbaren Schicht 16 ein leitfähiger Bereich in Form einer Heizschleife 19 erzeugt werden. Bei Verwendung einer transparenten Schicht 16 ohne abdunkelnde Tönung ist diese Heizschleife 19 nicht erkennbar und deshalb in Fig. 1 nur gestrichelt dargestellt. Eine Ausbildung von leitfähigen Bereichen 17 und nicht leitfähigen Bereichen 18 kann z.B. durch eine aus dem Halbleiterbereich an sich bekannte lokal unterschiedliche Dotierung der Schichten 15 und 16 realisiert werden.

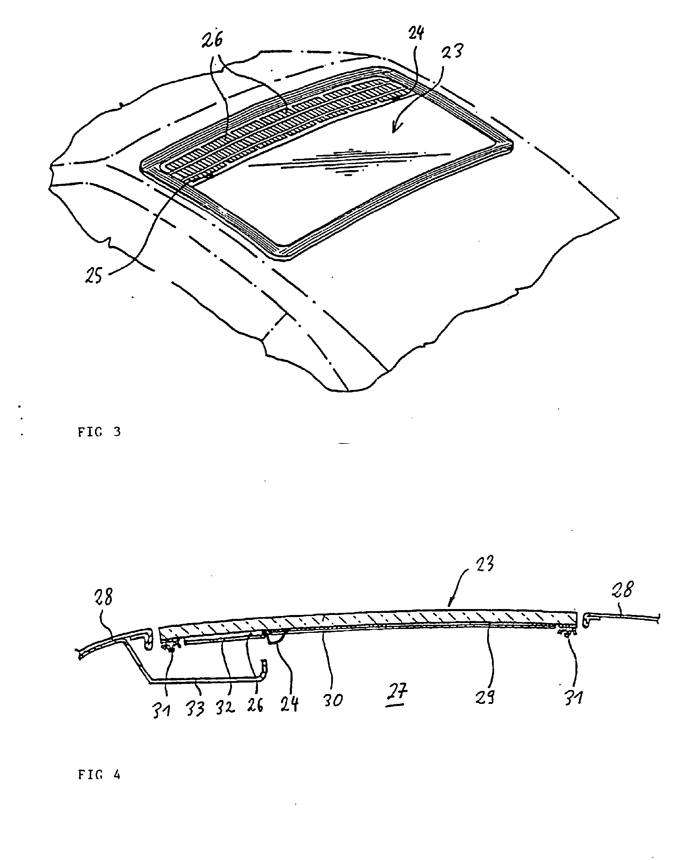

Aus den Fig. 3 und 4 geht ein Dachmodul mit einer erfindungsgemäßen Scheibe 23 hervor, deren z.B. über eine Klebefolie 29 angebrachte Schicht 30 über elektrische Anschlüsse 24 und 25 mit Solarzellen 26 zur Stromversorgung verbunden ist. Die Solarzellen können mit einer undurchsichtigen Folie 32 hinterlegt sein. Ein dachfester Bereich 33 kann nicht näher abgebildete Befestigungs-, Antriebs- oder sonstige Elemente der Dachmechanik umfassen. Das Dachmodul ist in einer Dachöffnung 27 einer Dachhaut 28 eines Fahrzeugdachs aufgenommen. An der Scheibe 23 können Verstär-kungselemente 31 angebracht sein, die mit einer nicht abgebildeten Dachmechanik in Verbindung stehen.

Sämtliche Ausführungsformen der transparenten Scheiben 4 und 5, die bei Fig. 1 und 2 im Zusammenhang mit dem Fahrzeugdach bereits erläutert wurden, können auch im Zusammenhang mit dem Dachmodul gemäß Fig. 3 und 4 realisiert werden.

### Bezugszeichenliste

- 1: Dachhaut
- 2: Dachöffnung
- 3: Dachöffnung
- 4: Scheibe
- 5: Scheibe
- 6: Solarzelle
- 7, 8: Anschluß
- 9,10: Anschluß
- 11: Bereich
- 12: Temperatursensor
- 13: Feuchtesensor
- 14: Fahrzeuginnenraum
- 15, 16: Schicht
- 17: leitfähiger Bereich
- 18: nicht-leitfähiger Bereich
- 19: Heizschleife
- 20: Windabweislamelle
- 21: Rahmen
- 22: Querstrebe
- 23: Scheibe
- 24, 25: Anschluß
- 26: Solarzelle
- 27: Dachöffnung
- 28: Dachhaut
- 29: Klebefolie
- 30: Schicht
- 31: Verstärkungselement
- 32: Folie
- 33: Bereich

## Patentansprüche

1. Transparente Scheibe für ein Fahrzeugdach mit wenigstens einem Dachelement oder für ein Dachmodul für ein Fahrzeugdach, wobei die Scheibe (4) zur Durchsicht vom Fahrzeuginneren nach außen nutzbar ist und eine Schicht (15,16,30) in Form einer Beschichtung und/oder Folie aufweist, welche die Transmission durch die Scheibe im infraroten und/oder im sichtbaren Spektralbereich verringert, **dadurch gekennzeichnet, daß** die Schicht (15, 16, 30) elektrische Anschlüsse (7, 8, 9, 10, 24, 25) zur Beheizung aufweist.

2. Transparente Scheibe nach Anspruch 1, **dadurch gekennzeichnet, daß** die Anschlüsse (7, 8, 9, 10, 24, 25) als Kontaktfahnen ausgebildet sind.

3. Transparente Scheibe nach Anspruch 1 oder 2, **dadurch gekennzeichnet, daß** mindestens eine Solarzelle (6, 26) im Fahrzeugdach oder im Dachmodul zur Stromversorgung der Schicht (15, 16, 30) vorgesehen ist.

4. Transparente Scheibe nach einem der vorgehenden Ansprüche, **dadurch gekennzeichnet, daß** eine Batterie, insbesondere eine Fahrzeugbatterie, zur Stromversorgung der Schicht (15, 16, 30) vorgesehen ist.

5. Transparente Scheibe nach einem der vorhergehenden Ansprüche, **dadurch gekennzeichnet, daß** ein Temperatursensor (12) zur Beheizung der Schicht (15, 16, 30) ab einer einstellbaren Grenztemperatur vorgesehen ist.

6. Transparente Scheibe nach einem der vorhergehenden Ansprüche, **dadurch gekennzeichnet, daß** ein Feuchtesensor (13) zur Beheizung der Schicht (15, 16, 30) ab einem einstellbaren Feuchtegehalt vorgesehen ist.

7. Transparente Scheibe nach einem der vorhergehenden Ansprüche, **dadurch gekennzeichnet, daß** die Schicht (15, 16, 30) mit mindestens einem Heizleiter des Fahrzeugs zur Aktivierung verbunden ist.

8. Transparente Scheibe nach einem der vorhergehenden Ansprüche, **dadurch gekennzeichnet, daß** ein Zeitschaltgerät zur zeitlich begrenzten Aktivierung der Schicht (15, 16, 30) vorgesehen ist.

9. Transparente Scheibe nach einem der vorhergehenden Ansprüche, **dadurch gekennzeichnet, daß** die Schicht (15, 16, 30) erste leitfähige Bereiche (17) und weitere nicht-leitfähige Bereiche (18) aufweist.

10. Transparente Scheibe nach einem der vorhergehenden Ansprüche, **dadurch gekennzeichnet, daß** die Schicht (15, 16, 30) als metallische Schicht ausgebildet ist.

11. Transparente Scheibe nach einem der vorhergehenden Ansprüche, **dadurch gekennzeichnet, daß** die beheizbare Schicht (15, 16, 30) transparent ist.

12. Transparente Scheibe nach Anspruch 11, **dadurch gekennzeichnet, daß** die beheizbare Schicht (15, 16, 30) Indium-Zinn-Oxid aufweist.

13. Transparente Scheibe nach Anspruch 11, **dadurch gekennzeichnet, daß** die beheizbare Schicht (15, 16, 30) Fluor-Zinn-Oxid aufweist.

14. Fahrzeugdach mit wenigstens einem Dachelement zum Einbau einer transparenten Scheibe (4, 5, 23) nach einem der Ansprüche 1-12.

15. Dachmodul für ein Fahrzeugdach, mit einer transparenten Scheibe (4, 5, 23) nach einem der Ansprüche 1 - 12.

## Claims

1. Transparent panel for a vehicle roof having at least one roof element or for a roof module for a vehicle roof, it being possible to use the panel (4) to look through to the outside from the vehicle interior and for the panel to have a layer (15, 10, 30) in the form of a coating and/or film which reduces the transmission through the panel in the infrared and/or in the visible spectral range, **characterized in that** the layer (15, 16, 30) has electric terminals (7, 8, 9, 10, 24, 25) for heating.

2. Transparent panel according to Claim 1, **characterized in that** the terminals (7, 8, 9, 10, 24, 25) are formed as contact lugs.

3. Transparent panel according to Claim 1 or 2, **characterized in that** at least one solar cell (6, 26) is provided in the vehicle roof or in the roof module in order to supply power to the layer (15, 16, 30).

4. Transparent panel according to one of the preceding claims, **characterized in that** a battery, in particular a vehicle battery, is provided in order to supply power to the layer (15, 16, 30).

5. Transparent panel according to one of the preceding claims, **characterized in that** a temperature sensor (12) is provided in order to heat the layer (15, 16, 30), beginning at an adjustable limiting temperature.

6. Transparent panel according to one of the preceding claims, **characterized in that** a moisture sensor (13) is provided in order to heat the layer (15, 16, 30), beginning at an adjustable moisture content.

7. Transparent panel according to one of the preceding claims, **characterized in that** the layer (15, 16, 30) is connected to at least one heating conductor of the vehicle for the purpose of activation.

8. Transparent panel according to one of the preceding claims, **characterized in that** a time switch is provided for the time-limited activation of the layer (15, 16, 30).

9. Transparent panel according to one of the preceding claims, **characterized in that** the layer (15, 16, 30) has first conductive regions (17) and further non-conductive regions (18).

10. Transparent panel according to one of the preceding claims, **characterized in that** the layer (15, 16, 30) is formed as a metallic layer.

11. Transparent panel according to one of the preceding claims, **characterized in that** the heatable layer (15, 16, 30) is transparent.

12. Transparent panel according to Claim 11, **characterized in that** the heatable layer (15, 16, 30) contains indium tin oxide.

13. Transparent panel according to Claim 11, **characterized in that** the heatable layer (15, 16, 30) contains fluorine tin oxide.

14. Vehicle roof having at least one roof element for the incorporation of a transparent panel (4, 5, 23) according to one of Claims 1 - 12.

15. Roof module for a vehicle roof, having a transparent panel (4, 5, 23) according to one of Claims 1 - 12.

## Revendications

1. Panneau transparent pour un toit de véhicule comportant au moins un élément de pavillon, ou pour un module destiné à un toit de véhicule, ledit panneau (4) pouvant être utilisé pour permettre une vue vers l'extérieur à partir de l'intérieur du véhicule, et étant muni d'une couche (15, 16, 30) se présentant comme un revêtement et/ou comme un feuil réduisant la transmission à travers ledit panneau, dans la plage infrarouge et/ou dans la plage spectrale visible, **caractérisé par le fait que** ladite couche (15, 16, 30) offre des raccordements électriques (7, 8, 9, 10, 24, 25) en vue du chauffage.

2. Panneau transparent selon la revendication 1, **caractérisé par le fait que** les raccordements (7, 8, 9, 10, 24, 25) sont réalisés sous la forme de lamelles de contact.

3. Panneau transparent selon la revendication 1 ou 2, **caractérisé par le fait qu'**au moins une cellule solaire (6, 26) est prévue, dans le toit de véhicule ou dans le module de toit, pour l'alimentation électrique de la couche (15, 16, 30).

4. Panneau transparent selon l'une des revendications précédentes, **caractérisé par le fait qu'**une batterie, notamment une batterie de véhicule, est prévue pour l'alimentation électrique de la couche (15, 16, 30).

5. Panneau transparent selon l'une des revendications précédentes, **caractérisé par le fait qu'**une sonde thermométrique (12) est prévue pour chauffer la couche (15, 16, 30) à partir d'une température limite réglable.

6. Panneau transparent selon l'une des revendications précédentes, **caractérisé par le fait qu'**un capteur d'humidité (13) est prévu pour chauffer la couche (15, 16, 30) à partir d'un taux d'humidité réglable.

7. Panneau transparent selon l'une des revendications précédentes, **caractérisé par le fait que** la couche (15, 16, 30) est raccordée à au moins un conducteur chauffant du véhicule, en vue de l'activation.

8. Panneau transparent selon l'une des revendications précédentes, **caractérisé par le fait qu'**une minuterie est prévue pour l'activation de la couche (15, 16, 30) avec limitation dans le temps.

9. Panneau transparent selon l'une des revendications précédentes, **caractérisé par le fait que** la couche (15, 16, 30) comprend des premières zones (17) conductrices, et d'autres zones (18) non conductrices.

10. Panneau transparent selon l'une des revendications précédentes, **caractérisé par le fait que** la couche (15, 16, 30) est réalisée sous la forme d'une couche métallique.

11. Panneau transparent selon l'une des revendications précédentes, **caractérisé par le fait que** la couche chauffable (15, 16, 30) est transparente.

12. Panneau transparent selon la revendication 11, **caractérisé par le fait que** la couche chauffable (15, 16, 30) présente de l'oxyde d'indium et d'étain.

13. Panneau transparent selon la revendication 1 **caractérisé par le fait que** la couche chauffable (15, 16, 30) présente de l'oxyde de fluor et d'étain.

14. Toit de véhicule, comportant au moins un élément de pavillon en vue de l'intégration d'un panneau transparent (4, 5, 23) selon l'une des revendications 1-12.

15. Module destiné à un toit de véhicule, comportant un panneau transparent (4, 5, 23) selon l'une des revendications 1-12.
